# EUROPÄISCHE PATENTSCHRIFT

(11) **EP 0 831 055 B1**
(45) Veröffentlichungstag und Bekanntmachung des Hinweises auf die Patenterteilung: **24.01.2001**
(21) Anmeldenummer: 97115791.2
(22) Anmeldetag: 11.09.1997
(51) Int. Cl.: C01B 3/38, B01J 12/00, H01M 8/06, F28D 9/00

(54) **Zentrale Heizvorrichtung für ein Gaserzeugungssystem**
Central heating apparatus for a gas generating system
Dispositif de chauffage central d'un système de génération de gaz

(30) Priorität: 24.09.1996 DE 19639150
(43) Veröffentlichungstag der Anmeldung: 25.03.1998
(73) Patentinhaber: XCELLSIS GmbH, 73230 Kirchheim / Teck-Nabern (DE)
(72) Erfinder: Benz, Uwe, 88690 Uhldingen (DE); Boneberg, Stefan, 89134 Blaustein (DE); Heil, Dietmar, 88477 Schwendi (DE)
(74) Vertreter: Kocher, Klaus-Peter

(56) Entgegenhaltungen:
- US-A- 4 112 876
- US-A- 4 714 593
- US-A- 4 788 004
- US-A- 4 909 808
- US-A- 5 180 561
- PATENT ABSTRACTS OF JAPAN vol. 011, no. 122 (E-500), 16. April 1987 & JP 61 269864 A (BABCOCK HITACHI KK), 29. November 1986
- PATENT ABSTRACTS OF JAPAN vol. 016, no. 461 (C-0988), 25. September 1992 & JP 04 164802 A (KAWASAKI HEAVY IND LTD;OTHERS: 01), 10. Juni 1992
- PATENT ABSTRACTS OF JAPAN vol. 007, no. 209 (C-186), 14. September 1983 & JP 58 108291 A (MATSUSHITA DENKI SANGYO KK), 28. Juni 1983

## Beschreibung

Die Erfindung betrifft eine Vorrichtung zur Bereitstellung von Wärmeenergie für ein Gaserzeugungssystem gemäß dem Oberbegriff des Patentanspruchs 1, sowie Verfahren zum Starten dieser Vorrichtung.

Beispielsweise beim Betrieb von Brennstoffzellen für mobile Anwendungen wird Wasserstoff aus einem kohlenwasserstoffhaltigen Rohgas, insbesondere Methanol, durch Wasserdampfreformierung oder partielle Oxidation erzeugt. Hierbei wird thermische Energie benötigt für die Erwärmung der Anlage beim Kaltstart, Verdampfung und Überhitzung von Wasser und Methanol und zur Deckung des Energiebedarfs der endothermen Wasserdampfreformierung.

In der Technik wird die Energie zur Deckung des Wärmebedarfs beispielsweise über die Verbrennung von Wasserstoff und/oder Methanol mit offener Flamme bereitgestellt. Solche Anordnungen weisen jedoch aufgrund der mangelnden Flammenstabilität ein schlechtes Teillastverhalten auf. Außerdem kommt es aufgrund der hohen Verbrennungstemperaturen zur Bildung von thermischen Stickoxiden, was insbesondere für mobile Anwendungen unerwünscht ist.

Weiterhin sind Wärmeerzeugungssysteme basierend auf der katalytischen Verbrennung von kohlenwasserstoffhaltigen Gasen bekannt. Hierbei können die Temperaturen bei der Verbrennung deutlich unter 1000 °C gehalten werden, so daß die Bildung von thermischen Stickoxiden verhindert wird. Aus der US-PS 49 09 808 ist eine gattungsgemäße Vorrichtung bekannt, bei der zur Bereitstellung von Wärmeenergie für die Wasserdampfreformierung ein Brennmittel/Luftgemisch einer Brennkammer zugeführt und dort katalytisch oxidiert wird.

Bei solchen Vorrichtungen kann die benötigte Wärmeenergie entweder direkt in der verbrauchenden Komponente oder in einer zentralen Komponente erzeugt werden, wobei der Wärmeeintrag im zweiten Fall über ein Wärmeträgermedium erfolgt. Aus der US-PS 51 80 561 ist ein Beispiel für die erste Ausführungsform bekannt. Hierbei wird Wasserstoff durch Dampfreformierung von Methan in einem Plattenreformer erzeugt, wobei sich im Plattenreformer Reaktionskammern und Kammern für die katalytische Verbrennung abwechseln. Ein Beispiel für die zweite Ausführungsform ist aus der JP 4-164802 A bekannt. Hierbei wird in einem Reaktor Wasserstoff durch Dampfreformierung von Methanol hergestellt, wobei der Reaktor indirekt durch einen heißen Gasstrom beheizt wird, der in einer zentralen katalytischen Brennkammer erzeugt wird. Um einen schnellen Startvorgang zu gewährleisten wird dort vorgeschlagen, beim Start der Vorrichtung ein Gemisch aus Methanol und vorgewärmter Luft zu verdampfen und in die Brennkammer zuzuführen und erst nach dem Erreichen einer höheren Temperatur auf ein Brenngas mit höherer Zündtemperatur umzuschalten.

Es ist die Aufgabe der Erfindung, eine gattungsgemäße Vorrichtung zur Bereitstellung von Wärmeenergie für ein Gaserzeugungssystem hinsichtlich Startverhalten und Abgasemissionen zu verbessern, sowie ein Verfahren zum Starten dieser Vorrichtung zu schaffen.

Die Aufgabe wird erfindungsgemäß durch die kennzeichnenden Merkmale des Patentansprüche 1, beziehungsweise 13 bis 15 gelöst.

Die erfindungsgemäße Vorrichtung weist den Vorteil auf, daß das Kaltstartverhalten weiter verbessert und die Emission von unverbranntem Brennmittel auch im Teillastbereich verhindert werden kann. Die Anordnung einer zusätzlichen Komponente für den Kaltstart mit integrierter Heizvorrichtung gewährleistet eine rasche Erwärmung des Gesamtsystems. Durch den Einsatz einer Restgaskomponente wird insbesondere in der Kaltstartphase und im Teillastbereich eine vollständige Umsetzung des Brennmittels gewährleistet, so daß das unerwünschte Entweichen von unverbranntem Brennmittel vermieden wird. In der Hauptbrennkammer, die vorzugsweise in Filterpressenbauweise ausgeführt ist, ist ein Wärmetauscher integriert, wodurch eine kompakte Bauweise und ein guter Wärmeübertrag ermöglicht wird.

Durch die Aufteilung des Gesamtsystems in drei Komponenten, wobei die Kaltstartkomponente hinsichtlich schnellem Ansprechverhalten, die Zentralkomponente hinsichtlich hoher Leistungsdichte und die Restgaskomponente hinsichtlich vollständigem Umsatz ausgelegt sind, wird ein Gesamtsystem mit einem schnellen Kaltstartverhalten, geringen Abgasemisionen in allen Betriebsbereichen, hoher maximaler Brennmittelkonzentration und damit großer Lastspreizung, beziehungsweise hoher Dynamik bei Laständerungen geschaffen. Außerdem kann das System durch eine Zudosierung von Brennmittel leicht geregelt werden.

Die beanspruchte Zentralkomponente weist durch die gemeinsame Zuführung von Brennmittel und Luft einen vereinfachten Aufbau auf. Durch die Möglichkeit, ein Temperaturprofil gezielt über die Lauflänge der Hauptbrennkammer einzustellen, kann der Wirkungsgrad deutlich verbessert werden, da die Vorrichtung mit hoher Brennstoffkonzentration, großer Leistung pro Brennraum und einer guten Verteilung der Reaktion über die gesamte Lauflänge betrieben werden kann.

Weitere Vorteile und Ausgestaltungen gehen aus den Unteransprüchen und der Beschreibung hervor. Die Erfindung ist nachstehend anhand einer Zeichnung näher beschrieben, wobei
- Fig. 1-3: drei Ausführungsbeispiele für den prinzipiellen Aufbau der erfindungsgemäßen Vorrichtung,
- Fig. 4: ein Ausführungsbeispiel für den Aufbau der zweiten Komponente und
- Fig. 5-6: zwei Ausführungsbeispiele für die erste Komponente zeigt.

Die Erfindung wird im folgenden anhand eines Ausführungsbeispiels, bei dem Wasserstoff für mobile Anwendungen von Brennstoffzellen durch Dampfreformierung aus Methanol hergestellt wird, beschrieben. Der Schutzbereich soll sich jedoch nicht auf dieses Beispiel beschränken. Vielmehr kann die Vorrichtung allgemein für alle Gaserzeugungssysteme verwendet werden, bei denen Wärmeenergie benötigt und über eine zentrale Heizvorrichtung zur Verfügung gestellt wird.

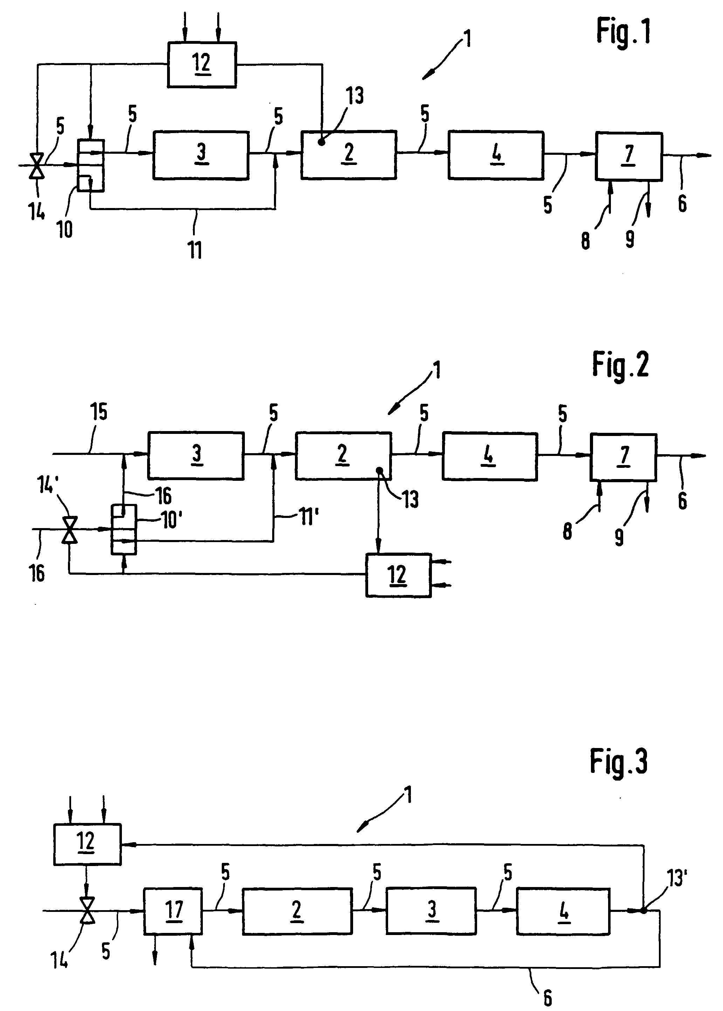

Gemäß Fig. 1 weist die insgesamt mit 1 bezeichnete Vorrichtung zur Bereitstellung von Wärmeenergie drei Komponenten 2-4 auf. Neben der Zentralkomponente 2, in der im Normalbetrieb der größte Teil des Brennmittels umgesetzt wird, sind zwei weitere Komponenten 3 und 4 vorgesehen. Alle drei Komponenten 2-4 weisen Brennkammern auf, in denen jeweils ein für die katalytische Oxidation des Brennmittels geeigneter Katalysator enthalten ist. Hierzu wird vorzugsweise ein Edelmetallkatalysator mit Platin oder Paladium oder einer Mischung hieraus als aktive Komponente verwendet.

Über eine erste Leitung 5 wird ein Gemisch aus einem sauerstoffhaltigen Gas und einem Brennmittel zugeführt. Bei dem sauerstoffhaltigen Gas handelt es sich vorzugsweise um Umgebungsluft. Bei dem Brennmittel kann es sich um ein beliebiges gasförmiges oder flüssiges Medium handeln, welches sich katalytisch oxidieren läßt. Beim beschriebenen Ausführungsbeispiel kann hierzu beispielsweise der Ausgangsstoff Methanol, das Produktgas Wasserstoff oder das wasserstoffhaltige Brennstoffzellenabgas verwendet werden. In dieser ersten Leitung 5 sind in Strömungsrichtung die Komponenten 3, 2 und 4 angeordnet. Nach dem Durchströmen aller Komponenten 2-4 wird dann das umgesetzte Gasgemisch über eine zweite Leitung 6 abgeleitet.

Die zweite Komponente 3 hat die Aufgabe, beim Kaltstart ein möglichst schnelles Anspringen des Systems 1 zu gewährleisten. Daher ist in der Brennkammer der Kaltstartkomponente 3 eine elektrische Heizvorrichtung vorgesehen. Zusätzlich ist es möglich, auch den zugeführten Luftstrom vorzuheizen. Bei Verwendung von flüssigem Methanol wird dies vorzugsweise in den vorgeheizten Luftstrom eingespritzt oder zerstäubt. Vorteilhafte Ausgestaltungen für die erste Komponente werden weiter unten beschrieben.

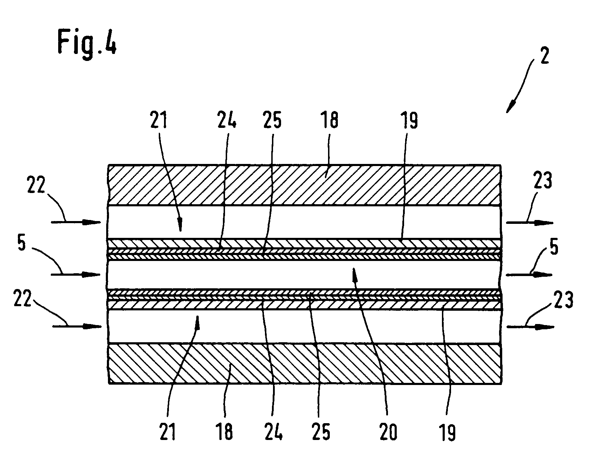

Nach dem Durchströmen der Kaltstartkomponente 3 wird das zumindest teilweise oxidierte Brennmittel über die erste Leitung 5 in die Brennkammer der Zentralkomponente 2 geleitet. Hier ist ein Wärmetauscher für die Übertragung von Wärmeenergie auf ein beliebiges Wärmeträgermedium oder direkt auf die zu beheizende Vorrichtung vorgesehen. Bei der zu beheizenden Vorrichtung kann es sich beispielsweise um einen Reformer oder einen Verdampfer handeln. Hierzu ist die Zentralkomponente 2 vorzugsweise in Filterpressenbauweise ausgeführt, wobei sich Reaktionskammern und Wärmeträgerkammern abwechseln. Der genaue Aufbau der zweiten Komponente wird weiter unten anhand von Fig. 4 näher erläutert. Die Zentralkomponente 2 ist so ausgelegt, daß in ihr die Hauptmenge an Brennmittel bezogen auf den oberen Lastbereich umgesetzt wird.

Nach dem Durchströmen der Zentralkomponente 2 gelangt das Gasgemisch schließlich in die Restgaskomponente 4. Diese ist für die möglichst vollständige Restgasverbrennung, insbesondere in der Kaltstartphase und im unteren Teillastbereich, aber auch bei Vollast ausgelegt. Die Restgaskomponente 4 steht ebenso wie die Kaltstartkomponente 3 nicht im Kontakt mit dem Wärmeträgermedium oder der wärmeverbrauchenden Vorrichtung. Dadurch wird ein zu schnelles Auskühlen dieser Komponenten 3, 4 bei geringer Brennmittelzufuhr und damit eine unvollständige Oxidation des Brennmittels verhindert.

Im Anschluß an die drei Komponenten 2-4 kann ein zusätzlicher Wärmetauscher 7 in der zweiten Leitung 6 vorgesehen werden. In diesem Wärmetauscher 7 findet keine katalytische Oxidation mehr statt, sondern es wird lediglich die im Abgas enthaltene Restwärme auf ein Wärmeträgermedium übertragen. Hierbei können die Zu- und Ableitungen 8, 9 für das Wärmeträgermedium entweder in den vorhandenen Wärmeträgerkreislauf integriert oder ein separater Wärmeträgerkreislauf vorgesehen werden. Das vollständig oxidierte Brennmittel/Luftgemisch wird schließlich über die zweite Leitung 6 an die Umgebung abgegeben

Stromauf der Kaltstartkomponente 3 ist in der ersten Leitung 5 ein Zweiwegeventil 10 vorgesehen. In der ersten Schaltstellung dieses Zweiwegeventils 10 wird das Brennmittel/Luftgemisch durch die Kaltstartkomponente 3 geführt, während in der zweiten Schaltstellung das Brennmittel/Luftgemisch über eine Bypassleitung 11 an der Kaltstartkomponente 3 vorbeigeführt wird. Die Bypassleitung 11 mündet zwischen der Kaltstartkomponente 3 und der Zentralkomponente 2 in die erste Leitung 5. Zur Steuerung des Zweiwegeventils 10 ist ein Steuergerät 12 vorgesehen. Als Eingangsgröße wird diesem Steuergerät 12 die Temperatur T₂ in der Zentralkomponente 2, die mit Hilfe eines Temperatursensors 13 ermittelt wird, zur Verfügung gestellt. Selbstverständlich können auch noch weitere Betriebsparameter als Eingangsgrößen berücksichtigt werden. Außerdem wird durch das Steuergerät 12 ein in der ersten Leitung 5 vorgesehenes Ventil 14 zur Regelung der Brennmittelzufuhr angesteuert.

Beim Kaltstart wird eine reduzierte Menge des Brennmittel/Luftgemisches durch die Kaltstartkomponente 3 geführt. Da hier eine elektrische Heizvorrichtung vorgesehen ist kommt es zu einem raschen Start der Reaktion, während in der auf eine hohe Leistungsdichte ausgelegten Zentralkomponente 2 die Reaktion noch nicht startet. Durch die Reaktion in der Kaltstartkomponente 3 nimmt das Brennmittel/Luftgemisch jedoch Wärme auf, die zumindest zum Teil beim anschließenden Durchströmen der Zentralkomponente 2 wieder abgegeben wird und somit zu einer Erwärmung der Zentralkomponente 2 führt. Beim Erreichen der Starttemperatur des verwendeten Katalysatormaterials beginnt dann auch die Reaktion in der Zentralkomponente 2. Dies wird vom Steuergerät 12 anhand des Temperatursensors 13 dadurch erkannt, daß die Temperatur T₂ eine vorgegebene Grenztemperatur T_{G} erreicht. Zu diesem Zeitpunkt wird das Zweiwegeventil 10 umgeschaltet, so daß das Brennmittel/Luftgemisch an der Kaltstartkomponente 3 vorbeigeführt wird. Gleichzeitig wird durch Steuerung des Ventils 14 die Brennmittelzufuhr solange erhöht, bis die Vorrichtung 1 eine vorgegebene Betriebstemperatur Tₛₒₗₗ erreicht. Diese Umschaltung ist notwendig, da im heißen Betrieb nämlich kein Brennmittel/Luftgemisch durch die Kaltstartkomponente 3 geführt werden darf, da dies bei hohen Brennmittelkonzentrationen zu einer Überhitzung und damit zu einer Schädigung des Katalysatormaterials in der Kaltstartkomponente 3 führen würde.

Durch die Optimierung der drei Komponenten 2-4 hinsichtlich unterschiedlicher Anforderungen kann ein hinsichtlich Startverhalten und Abgasemissionen verbessertes Gesamtsystem geschaffen werden. Hierzu sind die drei Komponenten 2-4 hinsichtlich gutem Wirkungsgrad, schnellem Ansprechverhalten und vollständigem Umsatz ausgelegt. Bei einem solchen System sind höhere Brennmittelkonzentrationen möglich. Außerdem ist eine hohe Dynamik, eine große Lastspreizung und eine leichte Regelbarkeit des Wärmebedarfs, beispielsweise über eine Brennmittelzudosierung, gegeben. Ausführungsbeispiele für die einzelnen Komponenten 2-4 werden weiter unten näher beschrieben.

Ein zweites Ausführungsbeispiel zeigt Fig. 2, wobei gleiche Teile gegenüber Fig. 1 mit gleichen Bezugsziffern gekennzeichnet sind. Im Gegensatz zu Fig. 1 gibt es bei dieser Anordnung getrennte Zuführungsleitungen 15, 16 für die Luft und das Brennmittel. Das vom Steuergerät 12 gesteuerte Ventil 14' und das Zweiwegeventil 10' sind im Gegensatz zum ersten Ausführungsbeispiel nicht in der ersten Leitung 5, sondern in der Brennmittelzuführungsleitung 16 angeordnet, während die Luftzuführungsleitung 15 direkt in die Kaltstartkomponente 3 mündet. Die Brennmittelzuführungsleitung mündet stromauf der Kaltstartkomponente 3 in die Luftzuführungsleitung 15, während die Brennmittel-Bypassleitung 11' das Zweiwegeventil 10 mit der ersten Leitung 5 stromab der Kaltstartkomponente 3 verbindet. In der ersten Schaltstellung dieses Zweiwegeventils 10 wird das Brennmittel in die Luftzuführungsleitung 15 geführt. Dort vermischt sich das Brennmittel mit der Luft, so daß wiederum ein Brennmittel/Luftgemisch durch die Kaltstartkomponente 3 geführt wird. In der zweiten Schaltstellung wird dagegen das Brennmittel über die Brennmittel-Bypassleitung 11' an der Kaltstartkomponente 3 vorbeigeführt. In dieser zweiten Schaltstellung wird somit die Kaltstartkomponente 3 lediglich von der Luft durchströmt, während durch die Zentralkomponente 2 und die Restgaskomponente 4 ein Brennmittel/Luftgemisch strömt. Die Steuerung des Ventils 14 und des Zweiwegeventils 10 erfolgt analog zum ersten Ausführungsbeispiel in Abhängigkeit von der Temperatur T₂ durch das Steuergerät 12.

Beim Ausführungsbeispiel gemäß Fig. 3 sind gleiche Teile gegenüber Fig. 1 wiederum mit gleichen Bezugsziffern gekennzeichnet. Hier sind die Zentralkomponente 2, die Kaltstartkomponente 3 und die Restgaskomponente 4 in Strömungsrichtung des Brennmittel/Luftgemisches nacheinander in der ersten Leitung 5 angeordnet. Das Ventil 14 ist ebenfalls in der ersten Leitung 5 vorgesehen, während auf das Zweiwegeventil 10 und auf die Bypassleitung 11 verzichtet werden kann. Zwischen dem Ventil 14 und der Zentralkomponente 2 ist jedoch zusätzlich ein Wärmetauscher 17 in der ersten Leitung 5 angeordnet. Dieser ist mit der zweiten Leitung 6 verbunden, so daß der Wärmetauscher 17 vom Abgas durchströmt wird und dadurch Wärme vom Abgas auf das zugeführte Brennmittel/Luftgemisch in der ersten Leitung 5 übertragen werden kann. Der Temperatursensor 13' ist im Gegensatz zu den beiden obigen Ausführungsbeispielen stromab der Restgaskomponente 4 in der zweiten Leitung 6 angeordnet.

Beim Kaltstart wird wiederum eine reduzierte Menge des Brennmittel/Luftgemisches zugeführt. Im Gegensatz zu den beiden ersten Ausführungsbeispielen wird dieses Brennmittel/Luftgemisch jedoch in allen Betriebsbereichen durch alle Komponenten 2-4 geführt. Da die Temperatur in der Zentralkomponente 2 zu Beginn jedoch zu niedrig ist, findet dort zunächst noch keine Reaktion statt. Durch die elektrische Heizeinrichtung erreicht zuerst die Kaltstartkomponente 3 die notwendige Starttemperatur. Durch die Reaktion in der Kaltstartkomponente 3 nimmt das Brennmittel/Luftgemisch Wärmeenergie auf, die dann zuerst auf die Restgaskomponente 4 übertragen wird. Anschließend wird auch das zugeführte Brennmittel/Luftgemisch mit Hilfe des Wärmetauschers 17 erwärmt, so daß es auch in der Zentralkomponente 2 zu einem Temperaturanstieg kommt. Erreicht die Temperatur in der Zentralkomponente 2 die notwendige Starttemperatur, so startet auch dort die Reaktion. Die dort entstehende Wärme wird jedoch weitgehend auf die Wärmeträgerkammern und nicht auf das Brennmittel/Luftgemisch übertragen, so daß am Temperatursensor 13' ein Temperaturabfall zu erkennen ist. Mit Hilfe des Steuergerätes 12 kann nun über das Ventil 14 die Brennmittelmenge erhöht und damit das System 1 auf die vorgegebene Betriebstemperatur Tₛₒₗₗ hochgefahren werden. Die Kaltstartkomponente 3 wird zwar weiterhin vom Brennmittel/Luftgemisch durchströmt. Da der Hauptumsatz jedoch in der Zentralkomponente 2 stattfindet treten in der Kaltstartkomponente 3 keine hohen Brennstoffkonzentrationen mehr auf, so daß eine Überhitzung der Kaltstartkomponente 3 nicht mehr befürchtet werden muß.

Im Heißbetrieb wird das Brennmittel/Luftgemisch durch den Wärmetauscher 17 vorgeheizt und in die Zentralkomponente 2 geführt. Dort findet der Hauptumsatz statt und gleichzeitig wird die Wärmeenergie auf ein Wärmeträgermedium oder direkt auf die zu beheizende Vorrichtung übertragen. Danach strömt das weitgehend umgesetzte Brennmittel/Luftgemisch durch die Kaltstartkomponente 3 und in die Restgaskomponente 4, wo der Restumsatz stattfindet. Bei diesem Ausführungsbeispiel ist es außerdem möglich, die Kaltstart- und die Restgaskomponente 3, 4 in eine Vorrichtung zu integrieren.

Fig. 4 zeigt einen Plattenreaktor zur mit integriertem Wärmetauscher, der vorzugsweise als Komponente 2 eingesetzt werden kann. Der Plattenreaktor 2 besteht aus zwei ebenen, parallel angeordneten Endplatten 18, zwischen denen zwei weitere, im wesentlichen parallel zu den Endplatten 18, angeordnete Trennwände 19 - beispielsweise in Form von Metallfolien - vorgesehen sind. Durch diese Anordnung der Endplatten 18 und Trennwände 19 bilden sich drei Kammern aus, wobei die mittlere, im folgenden als Hauptbrennkammer 20 bezeichnete Kammer vom Brennmittel/Luftgemisch durchströmt wird, während die beiden äußeren, im folgenden als Wärmeträgerkammern 21 bezeichneten Kammern vom Wärmeträgermedium durchströmt werden oder die wärmeverbrauchende Vorrichtung enthalten. Hierzu steht die Hauptbrennkammer 20 in Strömungsverbindung mit der ersten Leitung 5 und die Wärmeträgerkammern 21 mit den Zu- beziehungsweise Ableitungen 22, 23. Die Durchströmung der Hauptbrenn- und Wärmeträgerkammern 20, 21 kann im Gleich- oder Gegenstrom erfolgen. Neben der dargestellten Ausführungsform mit einer Hauptbrennkammer 20 und zwei Wärmeträgerkammern 21 kann die Komponente 2 auch durch Aufeinanderstapeln vieler Trennwände 19 aus einer Vielzahl von Hauptbrenn- beziehungsweise Wärmeträgerkammern 20, 21 bestehen.

Die der Hauptbrennkammer 20 zugewandten Innenflächen der Trennwände 19 sind mit einer Katalysatorschicht 24 belegt, an der die katalytische Oxidation des Brennmittel/Luftgemisches erfolgt. Um zu verhindern, daß die Temperatur an der Katalysatorschicht 24 lokal unzulässig hoch wird kann diese zusätzlich mit einer Diffusionsschicht 25 belegt werden. Diese Diffusionsschicht kann beispielsweise aus einer porösen Al₂O₃-Schicht, einem Metallvlies, einer Sintermetallplatte oder einer porösen Keramikmatte aus Titanoxid bestehen. In dieser Diffusionsschicht 25 bildet sich ein Gleichgewicht zwischen der Strömung von Brennmittel/Luftgemisch vom Hauptbrennraum 20 zur Katalysatorschicht 24 und von oxidiertem Gas von der Katalysatorschicht 24 zurück in den Hauptbrennraum 20. Dadurch können unzulässig hohe lokale Temperaturen verhindert werden. Solche sogenannten Hotspots können auftreten, wenn örtlich begrenzt die Reaktionsrate aufgrund höherer Brennmittelkonzentrationen ansteigt. Bei Verwendung einer Diffusionsschicht 25 führt jedoch die in diesem Fall erhöhte Rückströmung von oxidiertem Gas von der Katalysatorschicht 24 zum Hauptbrennraum 20 zu einer Verringerung der Strömung des Brennmittel/Luftgemisches zur Katalysatorschicht 24 und damit zu einer Selbstregulierung der Reaktionsrate beziehungsweise Temperatur.

Die Katalysatormenge kann hierbei zur Einstellung eines vorgegebenen Temperaturprofils in der Hauptbrennkammer 20 und damit in der wärmeaufnehmenden Vorrichtung als Funktion der Lauflänge variiert werden. Als Parameter kommen hierbei die Schichtdicke, die Masse oder der Edelmetallanteil im Katalysator in Frage. Außerdem können abwechselnd Bereiche mit und ohne Katalysatorbeschichtung vorgesehen werden, wobei über das Verhältnis dieser Bereiche die effektive Katalysatormenge eingestellt werden kann. Weiterhin kann auch die Diffusionsschicht hinsichtlich Porosität und/oder Schichtdicke über die Lauflänge variiert werden. Die beiden Schichten werden vorzugsweise derart variiert, daß vor allem im Einlaßbereich der Hauptbrennkammer 20 die Reaktionsgeschwindigkeit so mit der Wärmeabfuhr an das Wärmeträgermedium oder an die wärmeverbrauchende Vorrichtung abgestimmt ist, daß die maximale Temperatur in der gesamten Hauptbrennkammer 20 unter 600 °C bleibt.

Außerdem kann der Reaktionsbereich aus zwei oder mehreren Teilabschnitten bestehen, wobei der Einlaßbereich zum Abbau hoher Brennmittelkonzentrationen und der Auslaßbereich zur Vervollständigung des Umsatzes dient. Im Einlaßbereich muß die Reaktion gehemmt werden, da hier die höchsten Brennmittelkonzentrationen auftreten. Dies kann durch eine geringe Katalysatorbelegung und/oder einer wirksamen Diffusionsschicht erfolgen. Im weiteren Verlauf des Hauptbrennraumes 20 nimmt die Brennmittelkonzentration ab. Daher kann die Katalysatorbelegung erhöht und die Diffusionsschicht verringert oder weggelassen werden. Zusätzlich können mit Katalysator beschichtete Strukturen, beispielsweise Metall- oder Keramiknetze, mit einer schlechten thermischen Anbindung an die Trennwände 19 vorgesehen werden, um beim Kaltstart schneller auf die Starttemperatur zu kommen.

Als Wärmeträgermedium kann beispielsweise ein Thermoöl verwendet werden, das über entsprechende Zu- und Ableitungen 22, 23 durch die Wärmeträgerkammern 21 geführt wird. Das Wärmeträgermedium kann dann seriell oder parallel an alle Stellen im Gaserzeugungssystem geleitet werden, an denen Wärmeenergie benötigt wird. Die Verteilung der Wärmemenge auf die jeweilige Stelle kann außerdem durch entsprechende Regelorgane nach dem jeweiligen Bedarf eingestellt werden. Die Verwendung eines Wärmeträgermediums ist jedoch nicht unbedingt notwendig. Es ist gleichfalls möglich, die wärmeaufnehmende Vorrichtung, beispielsweise einen Reformer oder Verdampfer, direkt in die Wärmeträgerkammern 21 zu integrieren. Die Wärmeenergie wird dann durch die Trennwände 19 direkt auf diese Vorrichtungen übertragen.

Die katalytische Oxidation in der zweiten Zentralkomponente 2 startet erst, wenn eine bestimmte Starttemperatur erreicht ist. Die Starttemperatur hängt hierbei vom eingesetzten Katalysatormaterial beziehungsweise Brennmittel ab. Um nun insbesondere bei einem Kaltstart die Temperatur in der zweiten Komponente 2 auf die geforderte Starttemperatur zu bringen ist eine Kaltstartkomponente 3 mit einer Heizvorrichtung vorgesehen. In dieser Kaltstartkomponente 3 ist weder der Wirkungsgrad entscheidend noch ist eine vollständige Oxidation gefordert. Vielmehr wird in der Kaltstartkomponente 3 mit Hilfe einer Heizvorrichtung dafür gesorgt, daß zumindest lokal begrenzt die Temperatur soweit ansteigt, daß die katalytische Oxidation einsetzt. Die bei der örtlich beginnenden Oxidation frei werdende Wärme führt dann dazu, daß sich die Reaktion nach und nach auf die gesamte Kaltstartkomponente 3 und anschließend auf die gesamte Vorrichtung 1 ausdehnt.

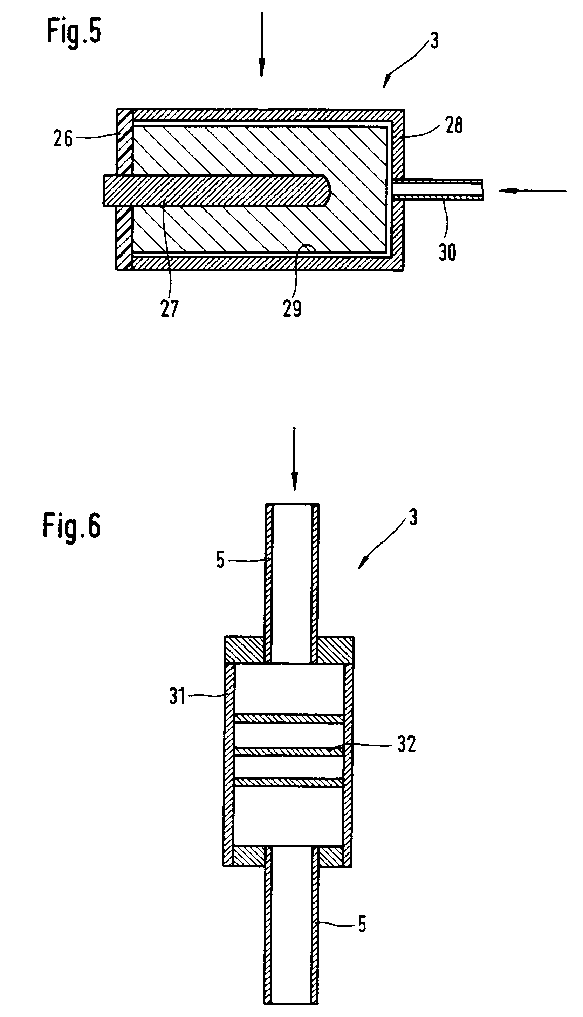

Für die erste Komponente sind verschiedene Ausführungsformen möglich. Ein erstes Ausführungsbeispiel ist in Fig. 5 dargestellt, wobei hier die Kaltstartkomponente 3 aus einem porösen Hohlkörper 26 besteht, in dessen Innenraum eine Heizvorrichtung 27, beispielsweise in Form einer Glühkerze, angeordnet ist. Der poröse Hohlkörper 26 kann beispielsweise aus einem Sintermetallgehäuse 28 bestehen, das mit einer Katalysatorschicht 29 überzogen oder mit Katalysatormaterial getränkt ist. Der Hohlkörper 26 wird von außen mit Luft umströmt, wobei der Luftstrom vorzugsweise mit Hilfe einer nicht dargestellten weiteren elektrischen Heizvorrichtung vorgewärmt ist. Durch das Sintermetallgehäuse 28 ist außerdem eine dünne Zuleitung 30 geführt, durch die Brennmittel in flüssiger Form in den Innenraum des Hohlkörpers 26 geführt wird. Beispielsweise kann flüssiges Methanol unter Druck eingespritzt werden. Die Zuleitung 30 ist vorzugsweise so angeordnet, daß das eingespritzte Brennmittel auf die Heizvorrichtung 27 trifft und dort verdampft wird. Das gasförmige Brennmittel tritt dann durch das poröse Metallgehäuse 28 aus und oxidiert in diesem Gehäuse mit der Umgebungsluft unter Wärmeabgabe am Katalysatormaterial 29.

In einer weiteren, nicht dargestellten Ausgestaltung kann der Raum zwischen der Heizvorrichtung 27 und dem Sintermetallgehäuse 28 mit einem metallischen Körper ausgefüllt werden, in dessen Oberfläche derartige Strukturen eingearbeitet sind, daß das flüssige Brennmittel optimal verteilt und somit eine möglichst gute Verdampfung des Brennmittels durch den porösen Hohlkörper 26 erreicht wird. Vorzugsweise ist der metallische Körper direkt auf der Glühkerze 27 angeordnet.

Ein weiteres Ausführungsbeispiel für die erste Komponente 3 zeigt Fig. 6. Hierbei wird das Brennmittel in den Luftstrom eingespritzt beziehungsweise zerstäubt und über die Leitung 5 zur Kaltstartkomponente 3 zugeführt. Diese Kaltstartkomponente 3 weist ein zylindrisches Gehäuse 31 auf, in dem ein oder mehrere katalysatorbeschichtete Metallträger 32 angeordnet sind. Diese Metallträger 32 können quer oder längs zur Strömungsrichtung des Brennmittel/Luftgemisches angeordnet werden. Die Metallträger 32 sind vorzugsweise als Netz oder Metallschwamm ausgebildet und werden elektrisch beheizt. Im einfachsten Fall ist der Metallträger 32 selbst als Heizleiter ausgebildet. Im Einlaßbereich des Reaktionsraumes, der als Misch- beziehungsweise Verteilungsbereich ausgebildet ist, sind keine Metallträger 32 vorgesehen.

Neben den beiden beschriebenen Ausführungsbeispielen für die erste Komponente 3 sind weitere Ausführungsformen denkbar. Beispielsweise kann auch die erste Komponente 3 als Plattenreaktor ausgeführt werden, wobei dann im Brennraum mit Katalysator beschichtete, elektrisch beheizte Metallträger vorgesehen sind. Weiterhin ist es auch möglich, die Kaltstartkomponente 3 als Schüttreaktor auszuführen, wobei auch in diesem Fall der Einlaßbereich als Misch- und Verteilerraum ausgebildet und daher nicht mit Katalysator befüllt ist und wobei im Bereich der Katalysatorschüttung eine Heizvorrichtung angeordnet ist.

Die Restgaskomponente 4 ist weder beheizt noch steht sie mit dem Wärmeträgermedium in Verbindung. Sie dient ausschließlich dazu, unverbrannte Brennmittelreste, die aus der Zentralkomponente 2 entweichen können, vollständig umzusetzen. Besondere Anforderungen hinsichtlich der Form dieser Restgaskomponente 4 werden daher nicht gestellt. Sie kann sowohl als Schüttreaktor, als auch als Plattenreaktor oder als Reaktor gemäß Fig. 6 ausgebildet werden. Lediglich die Wärmeträgerkammern und die Heizvorrichtungen entfallen.

## Patentansprüche

1. Vorrichtung zur Bereitstellung von Wärmeenergie für ein Gaserzeugungssystem, in dem unter Wärmezufuhr Wasserstoffgas aus einem kohlenwasserstoffhaltigen Rohgas erzeugt wird, wobei die Vorrichtung zur Bereitstellung von Wärmeenergie besteht aus
- einer Zentralkomponente, die eine Katalysatormaterial enthaltenden Hauptbrennkammer aufweist, in der ein Brennmittel mit Hilfe eines sauerstoffhaltigen Gases katalytisch oxidiert wird,
- einer ersten Leitung zur Zufuhr eines Brennmittel/Gasgemisches zur Hauptbrennkammer,
- einer zweiten Leitung zur Abfuhr des umgesetzten Brennmittel/Gasgemisches und
- Mittel zur Übertragung von Wärmeenergie von der Hauptbrennkammer auf das Gaserzeugungssystem
**dadurch gekennzeichnet,**
daß in der Vorrichtung zur Bereitstellung von Wärmeenergie zwei weitere, Katalysatormaterial (24) für die Oxidation des Brennmittels enthaltende Brennkammern (3, 4) vorgesehen sind, die jeweils zumindest zeitweise vom Brennmittel/Gasgemisch durchströmt werden, wobei
- die zweite Brennkammer (3) als Kaltstartkomponente ausgeführt ist, in der eine elektrische Heizvorrichtung (27) vorgesehen ist, und
- die ungeheizte dritte Brennkammer (4) als Komponente zur Restgasumsetzung ausgeführt ist.

2. Vorrichtung nach Anspruch 1,
**dadurch gekennzeichnet,**
daß die Kaltstart- und die Restgaskomponente (3, 4) in Strömungsrichtung des Brennmittel/Gasgemisches nacheinander stromab der Zentralkomponente (2) in der ersten Leitung (5) angeordnet sind und daß stromauf der Hauptbrennkammer (2) ein Wärmetauscher (17) vorgesehen ist, der stromab der Restgaskomponente (4) von der zweiten Leitung (6) durchströmt wird.

3. Vorrichtung nach Anspruch 1,
**dadurch gekennzeichnet,**
daß die Kaltstartkomponente (3) stromauf der Zentralkomponente (2) und die Restgaskomponente (4) stromab der Zentralkomponente (2) in der ersten Leitung (5) angeordnet sind und daß parallel zur Kaltstartkomponente (3) eine über ein Zweiwegeventil (10) steuerbare Bypassleitung (11) vorgesehen ist.

4. Vorrichtung nach Anspruch 1,
**dadurch gekennzeichnet,**
daß separate Luft- und Brennmittelzuführungsleitungen (15, 16) vorgesehen sind, daß die Luftzuführungsleitung (15) in die Brennkammer der Kaltstartkomponente (3) mündet, daß die Brennmittelzuführungsleitung (16) stromauf der Kaltstartkomponente (3) in die Luftzuführungsleitung (15) mündet und daß parallel zur Kaltstartkomponente (3) eine Brennmittelbypassleitung (11') vorgesehen ist, die mit Hilfe eines in der Brennmittelzuführungsleitung (16) angeordneten Zweiwegeventils (10') steuerbar ist.

5. Vorrichtung nach Anspruch 1,
**dadurch gekennzeichnet,**
daß die Kaltstartkomponente (3) als poröser, außen mit Katalysatormaterial (29) beschichteter Hohlkörper (26) ausgebildet ist, in dessen Innenraum die elektrische Heizvorrichtung (27) angeordnet ist, wobei der Hohlkörper (26) von außen vom sauerstoffhaltigen Gas umspült und das Brennmittel in den Innenraum des Hohlkörpers (26) geleitet wird.

6. Vorrichtung nach Anspruch 5,
**dadurch gekennzeichnet,**
daß im Innenraum des Hohlkörpers (26) ein metallischer Körper zur Verteilung und Verdampfung des Brennmittels vorgesehen ist.

7. Vorrichtung nach Anspruch 6,
**dadurch gekennzeichnet,**
daß der metallische Körper direkt auf die Heizwendel der elektrischen Heizvorrichtung (27) aufgebracht ist.

8. Vorrichtung nach Anspruch 1,
**dadurch gekennzeichnet,**
daß die Zentralkomponente (2) als Reaktor in Filterpressenbauweise abwechselnd aus Hauptbrennkammern (20) und Wärmeträgerkammern (21) aufgebaut ist, wobei die der Hauptbrennkammer (20) zugewandten Flächen der Trennwände (19) zwischen den Hauptbrennbeziehungsweise Wärmeträgerkammern (20, 21) mit Katalysatormaterial (24) beschichtet sind.

9. Vorrichtung nach Anspruch 8,
**dadurch gekennzeichnet,**
daß auf die Katalysatorschicht (24) eine Diffusionsschicht (25) aufgebracht ist.

10. Vorrichtung nach Anspruch 8 oder 9,
**dadurch gekennzeichnet,**
daß die Katalysatorbelegung und/oder die Dicke und/oder die Porosität der Diffusionsschicht (25) zur Einstellung einer lokalen Reaktionsrate und damit eines Temperaturprofils über die Lauflänge der Hauptbrennkammer (20) variiert.

11. Vorrichtung nach Anspruch 8,
**dadurch gekennzeichnet,**
daß eine wärmeaufnehmende Vorrichtung des Gaserzeugungssystems in die Wärmeträgerkammern (21) integriert ist.

12. Vorrichtung nach Anspruch 8,
**dadurch gekennzeichnet,**
daß die Wärmeträgerkammern (21) von einem Wärmeträgermedium, das die Wärme aufnimmt und auf das Gaserzeugungssystem überträgt, durchströmbar ist.

13. Verfahren zum Starten der Vorrichtung nach Anspruch 2,
**dadurch gekennzeichnet,**
daß beim Start die zugeführte Brennmittelmenge begrenzt wird, daß die Temperatur (T₆) in der zweiten Leitung (6) erfaßt wird und daß dann, wenn die Temperatur (T₆) eine vorgegebene Grenztemperatur (T_{g}) zuerst über- und anschließend wieder unterschreitet, die Vorrichtung (1) durch Erhöhung der Brennmittelzufuhr auf eine vorgegebene Betriebstemperatur (Tₛₒₗₗ) gebracht wird.

14. Verfahren zum Starten der Vorrichtung nach Anspruch 3
**dadurch gekennzeichnet,**
daß beim Start das Brennmittel/Gasgemisch durch die Kaltstartkomponente (3) geführt wird, daß die Temperatur (T₂) in der Hauptbrennkammer (2) erfaßt wird und daß bei Erreichen einer vorgegebenen Grenztemperatur (T_{G}) das Brennmittel/Gasgemisch durch Schalten des Zweiwegeventils (10) über die Bypassleitung (11) an der Kaltstartkomponente (3) vorbeigeführt wird.

15. Verfahren zum Starten der Vorrichtung nach Anspruch 4
**dadurch gekennzeichnet,**
daß beim Start das Brennmittel in die Luftzuführungsleitung (15) geleitet wird, daß die Temperatur (T₂) in der Hauptbrennkammer (2) erfaßt wird und daß bei Erreichen einer vorgegebenen Grenztemperatur (T_{G}) das Brennmittel durch Schalten des Zweiwegeventils (10') über die Brennmittel-Bypassleitung (11') an der Kaltstartkomponente (3) vorbei in die erste Leitung (5) geleitet wird.

16. Verfahren nach Anspruch 14 oder 15,
**dadurch gekennzeichnet,**
daß beim Start die zugeführte Brennmittelmenge begrenzt wird und daß nach dem Erreichen der vorgegebenen Grenztemperatur (T_{g}) die Vorrichtung (1) durch Erhöhung der Brennmittelzufuhr auf eine vorgegebene Betriebstemperatur (Tₛₒₗₗ) gebracht wird

## Claims

1. Device for providing heat energy for a gas-generating system, in which hydrogen gas is generated from a basic gas containing hydrocarbon by applying heat, the device for providing heat energy consisting of
- a central component, having a main combustion chamber containing a catalytic material, in which a fuel is catalytically oxidised with the aid of an oxygen-containing gas,
- a first line for delivering a fuel/gas mixture to the main combustion chamber,
- a second line for discharging the converted fuel/gas mixture and
- means for transferring heat energy from the main combustion chamber to the gas-generating system,
**characterised in that**
two additional combustion chambers (3, 4) containing catalytic material (24) for oxidising the fuel are provided in the device for producing heat energy, through each of which the fuel/gas mixture flows at least part of the time,
- the second chamber combustion chamber (3) being provided as a cold start component in which an electric heating device (27) is provided and
- the unheated third combustion chamber (4) being provided as a component for converting residual gas.

2. Device as claimed in claim 1,
**characterised in that**
the cold start and the residual gas components (3, 4) are arranged in the first line (5) one after the other in the flow direction of the fuel/gas mixture and a heat exchanger (17) is provided upstream of the main combustion chamber (2), through which the second line (6) flows downstream of the residual gas component (4).

3. Device as claimed in claim 1,
**characterised in that**
the cold start component (3) is arranged upstream of the central component (2) and the residual gas component (4) downstream of the central component (2) in the first line (5) and a by-pass line (11) controllable by a two-way valve (10) is provided parallel with the cold start component (3).

4. Device as claimed in claim 1,
**characterised in that**
separate air and fuel delivery lines (15, 16) are provided, the air delivery line (15) opening into the combustion chamber of the cold start component (3), the fuel delivery line (16) opening into the air delivery line (15) upstream cold start component (3), and a fuel by-pass line (11') is provided parallel with the cold-start component (3) which can be controlled by means of a two-way valve (10') disposed in the fuel delivery line (16).

5. Device as claimed in claim 1,
**characterised in that**
the cold start component (3) is provided as a porous hollow member (26) externally coated with catalytic material (29), in the interior of which the electric heating device (27) is disposed, the oxygen-containing gas being applied from the exterior around the hollow member (26) and the fuel being delivered to the interior of the hollow member (26).

6. Device as claimed in claim 5,
**characterised in that**
a metal body is provided in the interior of the hollow member (26) in order to distribute and evaporate the fuel.

7. Device as claimed in claim 6,
**characterised in that**
the metal body is mounted directly on the heating filament of the electric heating device (27).

8. Device as claimed in claim 1,
**characterised in that**
the central component (2) is provided as a reactor with a filter press structure built of alternating main combustion chambers (20) and heat exchanger chambers (21), the faces of the dividing walls (19) between the main combustion and heat exchanger chambers (20, 21) facing the main combustion chamber (20) being coated with catalytic material (24).

9. Device as claimed in claim 8,
**characterised in that**
a diffusion layer (25) is placed on top of the catalyst layer (24).

10. Device as claimed in claim 8 or 9,
**characterised in that**
the catalytic layer and/or the thickness and/or the porosity of the diffusion layer (25) vary as a means of producing a local reaction rate and hence a temperature profile across the effective length of the main combustion chamber (20).

11. Device as claimed in claim 8,
**characterised in that**
a heat-receiving device of the gas-generating system is integrated in the heat exchanger chambers (21).

12. Device as claimed in claim 8,
**characterised in that**
the heat exchanger chambers (21) have a heat exchange medium flowing through them which picks up the heat and transfers it to the gas-generating system.

13. Method of starting the device as claimed in claim 2,
**characterised in that**
the delivered fuel quantity is limited on start-up, the temperature (T₆) in the second line (6) is detected and, if the temperature (T₆) firstly exceeds and then falls back below a predetermined threshold temperature (T_{g}), the device (1) is brought to a predetermined operating temperature (T_{desired}) by increasing the fuel delivery.

14. Method of starting the device as claimed in claim 3,
**characterised in that**
on start-up, the fuel/gas mixture is fed through the cold start component (3), the temperature (T₂) in the main combustion chamber (2) is detected and, when a predetermined threshold temperature (T_{G}) is reached, the fuel/gas mixture is fed via the fuel by-pass line (11), by-passing the cold start component (3), by switching the two-way valve (10).

15. Method of starting the device as claimed in claim 4,
**characterised in that**
on start-up, the fuel is fed into the air delivery line (15), the temperature (T₂) in the main combustion chamber (2) is detected and, when a predetermined threshold temperature (T_{G}) is reached, the fuel is fed via the fuel by-pass line (11'), by switching the two-way valve (10'), by-passing the cold start component (3), into the first line (5).

16. Method as claimed in claim 14 or 15,
**characterised in that**
on cold-start, the delivered fuel quantity is limited and once the predetermined threshold temperature (T_{g}) is reached, the device (1) is brought to a predetermined operating temperature (T_{desired}) by increasing the fuel delivery.

## Revendications

1. Dispositif de fourniture d'énergie calorifique à un système de génération de gaz, dans lequel avec un apport de chaleur, du gaz hydrogène est généré à partir d'un gaz brut contenant des hydrocarbures, le dispositif de fourniture d'énergie calorifique étant constitué d' :
- un composant central, présentant une chambre de combustion principale, contenant du matériau catalyseur, chambre dans laquelle un combustible est oxydé par voie catalytique à l'aide d'un gaz contenant de l'oxygène,
- une première conduite pour l'amenée d'un mélange combustible/gaz à la chambre de combustion principale,
- une deuxième conduite pour l'évacuation du mélange combustible/gaz converti, et
- des moyens pour transmettre de l'énergie calorifique, de la chambre de combustion principale au système de génération de gaz
caractérisé en ce que,
dans le dispositif de fourniture d'énergie calorique, sont prévues deux autres chambres de combustion (3, 4) contenant du matériau catalyseur (24) pour l'oxydation du combustible, chambres de combustion traversées chacune, au moins par moments, par un écoulement d'un mélange combustible/gaz, où
- la deuxième chambre de combustion (3) est réalisée sous la forme d'un composant pour démarrage à froid, dans lequel est prévu un dispositif de chauffage électrique (27), et
- la troisième chambre de combustion (4) non chauffée est réalisée sous la forme de composants de conversion des gaz résiduels.

2. Dispositif selon la revendication 1, caractérisé en ce que les composants pour démarrage à froid et pour gaz résiduels (3, 4) sont disposés, dans la direction de l'écoulement du mélange combustible/gaz, l'un après l'autre, en aval du composant central (2) dans la première conduite (5), et en ce qu'en amont de la chambre de combustion principale (2) est prévu un échangeur de chaleur (17) qui est traversé par un écoulement, pris en aval du composant pour gaz résiduel (4) et amené par la deuxième conduite (6).

3. Dispositif selon la revendication 1, caractérisé en ce que le composant pour démarrage à froid (3) est disposé en amont du composant central (2) et le composant pour gaz résiduel (4) est disposé en aval du composant central (2) dans la première conduite (5), et en ce qu'une conduite de dérivation (11), susceptible d'être commandée par l'intermédiaire d'une soupape à deux voies (10), est prévue parallèlement au composant pour démarrage à froid (3).

4. Dispositif selon la revendication 1, caractérisé en ce que des conduites d'alimentation d'air et de combustible (15, 16) séparées sont prévues, en ce que la conduite d'alimentation d'air (15) débouche dans la chambre de combustion du composant pour démarrage à froid (3), en ce que la conduite d'alimentation en combustible (16) débouche en amont du composant pour démarrage à froid (3) dans la conduite d'alimentation en air (15), et en ce que, parallèlement au composant pour démarrage à froid (3), est prévu une conduite de dérivation de combustible (11'), qui est susceptible d'être commandée à l'aide d'une soupape à deux voies (10') disposée dans la conduite d'alimentation en combustible (16).

5. Dispositif selon la revendication 1, caractérisé en ce que le composant pour démarrage à froid (3) est réalisé sous la forme d'un corps creux (26) poreux, revêtu extérieurement d'un matériau catalyseur (29), corps creux dans l'espace intérieur duquel est disposé le dispositif de chauffage électrique (27), le corps creux (26) étant exposé de l'extérieur au passage d'un gaz contenant de l'oxygène et le combustible étant dirigé dans l'espace intérieur du corps creux (26).

6. Dispositif selon la revendication 5, caractérisé en ce que dans l'espace intérieur du corps creux (26) est prévu un corps métallique assurant la répartition et l'évaporation du combustible.

7. Dispositif selon la revendication 6, caractérisé en ce que le corps métallique est appliqué directement sur l'enroulement de chauffage du dispositif de chauffage électrique (27).

8. Dispositif selon la revendication 1, caractérisé en ce que le corps central (2) est construit sous la forme d'un réacteur en mode de construction des filtres-presses, avec une alternance de chambres de combustion principales (20) et de chambres à caloporteur (21), les surfaces, tournées vers la chambre de combustion principale (20), des parois de séparation (19) entre les chambres de combustion principales et/ou les chambres à caloporteur (20, 21) étant revêtues de matériau catalyseur (24).

9. Dispositif selon la revendication 8, caractérisé en ce qu'une couche de diffusion (25) est appliquée sur la couche de catalyseur (24).

10. Dispositif selon la revendication 8 ou 9, caractérisé en ce que le garnissage en catalyseur et/ou l'épaisseur et/ou la porosité de la couche de diffusion (25) est/sont modifié(es) en vue de régler un taux de réaction local et ainsi un profil de température, par le biais de la longueur de passage de la chambre de combustion principale (20).

11. Dispositif selon la revendication 8, caractérisé en ce qu'un dispositif captant la chaleur et appartenant au système de génération de gaz est intégré dans les chambres à caloporteur (21).

12. Dispositif selon la revendication 8, caractérisé en ce les chambres à caloporteur (21) sont susceptibles d'être traversées par un écoulement de fluide caloporteur, qui capte la chaleur et la transmet au système de génération de gaz.

13. Procédé de démarrage du dispositif selon la revendication 2, caractérisé en ce que, lors du démarrage, la quantité de combustible amenée est limitée, en ce que la température (T₆) dans la deuxième conduite (6) est appréhendée et en ce qu'ensuite, lorsque la température (T₆) d'abord dépasse une température limite (T₉) prédéterminée puis descend ensuite au-dessous de celle-ci, le dispositif (1) est porté à une température de fonctionnement (T_{consigne}) prédéterminée par augmentation de l'apport en combustible.

14. Procédé de démarrage du dispositif selon la revendication 3, caractérisé en ce que, lors du démarrage, le mélange combustible/gaz est guidé à travers le composant pour démarrage à froid (3), en ce que la température (T₂) régnant dans la chambre de combustion principale (2) est appréhendée, et en ce que, lors de l'atteinte d'une température limite (T_{G}) prédéterminée, le mélange combustible/gaz est passé en sautant le composant pour démarrage à froid (3), par commutation de la soupape à deux voies (10), et en passant par la conduite de dérivation (11).

15. Procédé de démarrage du dispositif selon la revendication 4, caractérisé en ce que, lors du démarrage, le combustible est dirigé dans la conduite d'amenée d'air (15), en ce que la température (T₂) régnant dans la chambre de combustion principale (2) est appréhendée, et en ce que, lors de l'atteinte d'une température limite (T_{G}) prédéterminée, le combustible est amené, par commutation de la soupape à deux voies (10'), en passant par la conduite de dérivation de combustible (11'), en sautant le composant pour démarrage à froid (3), en étant dirigé dans la première conduite (5).

16. Procédé selon la revendication 14 ou 15, caractérisé en ce que, lors du démarrage, la quantité de combustible amené est limitée, et en ce que, après atteinte de la température limite (T_{g}) prédéterminée, le dispositif (1) est amené à une température de fonctionnement (T_{consigne}) prédéterminée, par augmentation de l'apport en combustible.
